**Europäisches Patentamt**

**European Patent Office**

**Office européen des brevets**

(11) Veröffentlichungsnummer : **0 059 769**
**B1**

(12) # EUROPÄISCHE PATENTSCHRIFT

(45) Veröffentlichungstag der Patentschrift : 09.10.85

(51) Int. Cl.⁴ : **G 01 L 9/12, G 01 L 13/02**

(21) Anmeldenummer : **81101676.5**

(22) Anmeldetag : **07.03.81**

(54) **Differenzdruckaufnehmer.**

(43) Veröffentlichungstag der Anmeldung : 15.09.82 Patentblatt 82/37

(45) Bekanntmachung des Hinweises auf die Patenterteilung : 09.10.85 Patentblatt 85/41

(84) Benannte Vertragsstaaten : **DE FR GB**

(56) Entgegenhaltungen :
US-A- 2 345 071
US-A- 2 542 905
US-A- 3 545 275
US-A- 4 103 555
REVIEW OF SCIENTIFIC INSTRUMENTS, Band 51, Nr. 4, April 1980, NEW YORK (US) D.S. GREYWALL et al.: "High precision 3He-vapor-pressure gauge for use to 0.3.K", Seiten 509, 510
REVIEW SCIENTIFIC INSRUMENTS, Band 40, November 1969, Nr. 11, NEW YORK (US) G.C. STRATY et al.: "Highly Sensitive Capacitive Pressure Gauge", Seiten 1393-1397

(73) Patentinhaber : **Kernforschungszentrum Karlsruhe GmbH**
**Weberstrasse 5**
**D-7500 Karlsruhe 1 (DE)**

(72) Erfinder : **Schmidt, Curt, Dr. Dipl. Phys.**
**Kolbergerstrasse 28 c**
**D-7500 Karlsruhe (DE)**

EP 0 059 769 B1

## Beschreibung

Die Erfindung betrifft einen Differenzdruckaufnehmer nach dem Oberbegriff des Anspruches 1.

Die Magnetfelder von Fusionsreaktoren mit magnetischem Einschluß des Plasmas können aus ökonomischen Gründen nur mit supraleitenden Magnetspulen erzeugt werden. Dabei werden auch supraleitende Hohlleiter eingesetzt, die mit überkritischem Helium gekühlt werden. Aus Gründen der Betriebssicherheit ist es erforderlich, den Druckabfall des flüssigen Heliums über einer vorbestimmten Länge des Hohlleiters zu messen, damit in jedem Fall eine ausreichende Kühlung gesichert und ein unerwünschter Übergang von supraleitenden in den normalleitenden Zustand ausgeschlossen wird.

Es ist eine Helium-Dampfdruck-Meßeinrichtung für einen Temperaturbereich bis 0,3 K bekannt (Rev. Sci. Instrum. 51 (4), April 1980, Seiten 509-510), die im wesentlichen aus einem Meßkondensator besteht, dessen Kapazität dadurch verändert wird, daß ein Diaphragma als Hilfselektrode einer der beiden Kondensatorplatten in Abhängigkeit von dem Gasdruck in einer durch das Diaphragma abgeschlossenen Heliumkammer angenähert wird.

Die Nachteile dieser bekannten Meßeinrichtung bestehen insbesondere darin, daß der Konstruktive Aufbau einer Kammer mit Diaphragma sehr aufwendig ist, und daß die Entwicklung einer entsprechenden Elektronik und eine Erprobung in starken Magnetfeldern erforderlich wäre.

Der Erfindung liegt die Aufgabe zugrunde, die bekannte Meßeinrichtung zu verbessern und den den Heliumdruck messenden Kondensator aus bekannten und seit langem erprobten Bauteilen aufzubauen.

Diese Aufgabe wird bei einem Differenzdruckaufnehmer nach dem Oberbegriff des Anspruches 1 durch die in dessen Kennzeichen genannten Merkmale gelöst.

Die mit dem vorgeschlagenen Differenzdruckaufnehmer erzielten Vorteile bestehen insbesondere darin, daß bei einfachem konstruktivem Aufbau unter Verwendung erprobter Bauteile eine lineares Ausgangssignal bei hoher Empfindlichkeit erreicht wird.

Ausführungsbeispiele eines Differenzdruckaufnehmers mit den Merkmalen der Ansprüche 1 bis 4 sind in der Zeichnung dargestellt und werden im folgenden näher beschrieben. Es zeigen :

Figur 1 vereinfachte Meßanordnung mit einem Differenzdruckaufnehmer,

Figur 2 Achsschnitt eines Differenzdruckaufnehmers,

Figur 3 Schnitt III-III des Differenzdruckaufnehmers,

Figur 4 Achsschnitt eines Differenzdruckaufnehmers mit einem seitlichen Heliumanschlußstutzen,

Figur 5 Eichkurve des Differenzdruckaufnehmers für Auslenkungen im mm-Bereich,

Figur 6 Eichkurve des Differenzdruckaufnehmers für Auslenkungen in $\mu$m-Bereich.

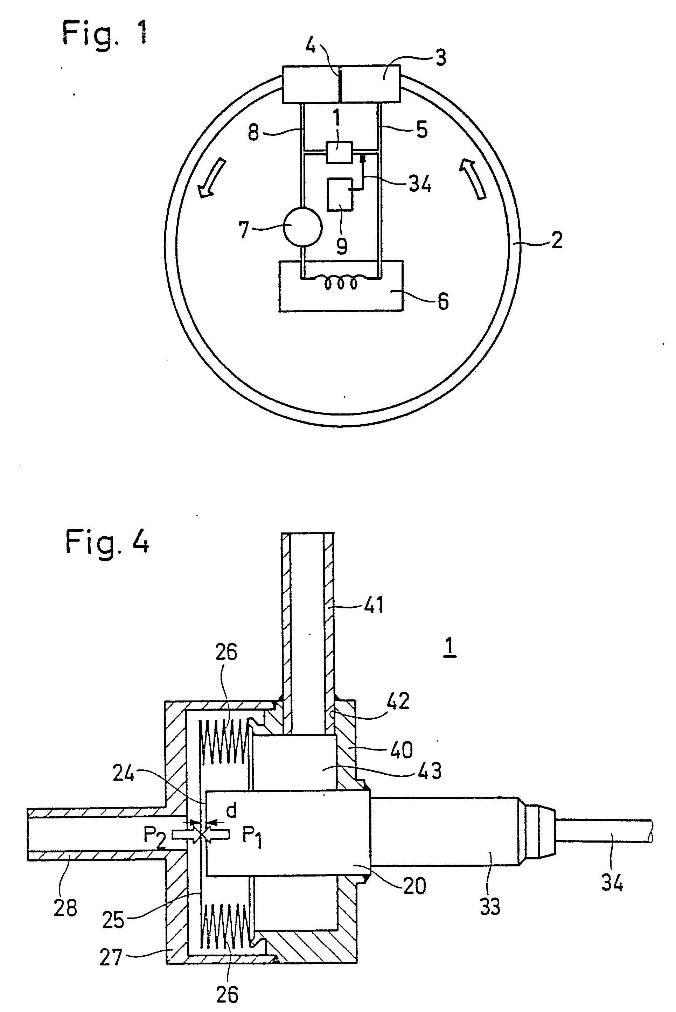

Fig. 1 zeigt den vorgeschlagenen Differenzdruckaufnehmer 1 in einer vereinfacht dargestellten Meßanordnung zum Messen des Druckabfalles des in einer Supraleiteranordnung 2 strömenden überkritischen Flüssigheliums. Die Supraleiteranordnung 2 besteht aus einem Träger, auf dem Supraleiter so angeordnet sind, daß unter Einschluß der Ummantelung Kühlkanäle für den Heliumtransport gebildet werden. Die Enden der kreisförmig gebogenen Supraleiteranordnung 2 sind in einen Anschlußblock 3 geführt, in dem jeder Supraleiter zu einem Kurzschlußring verbunden ist. Durch eine Trennwand 4 im Anschlußblock 3 wird der Heliumstrom über einen Ausgang 5, einen Wärmetauscher 6, und eine Pumpe 7 zu einem auf der vom Ausgang 5 abgewandten Seite der Trennwand 4 angeordneten Eingang 8 geleitet, der mit dem anderen Ende der Supraleiteranordnung 2 verbunden ist. Zwischen den Ausgang 5 und den Eingang 8 des Anschlußblockes 3 ist der Differenzdruckaufnehmer 1 geschaltet, der den Druckabfall in der Supraleiteranordnung 2 mißt. Dem Differenzdruckaufnehmer 1 ist eine Meßwertverarbeitung 9 nachgeschaltet.

Die Meßanordnung ist in einem zur Zeichenebene senkrechten Magnetfeld von ca. 5 Tesla angeordnet und wird von einem Vakuumkessel eingeschlossen. Durch Variation des äußeren Magnetfeldes kann in der Supraleiteranordnung 2 ein Transportstrom induziert werden.

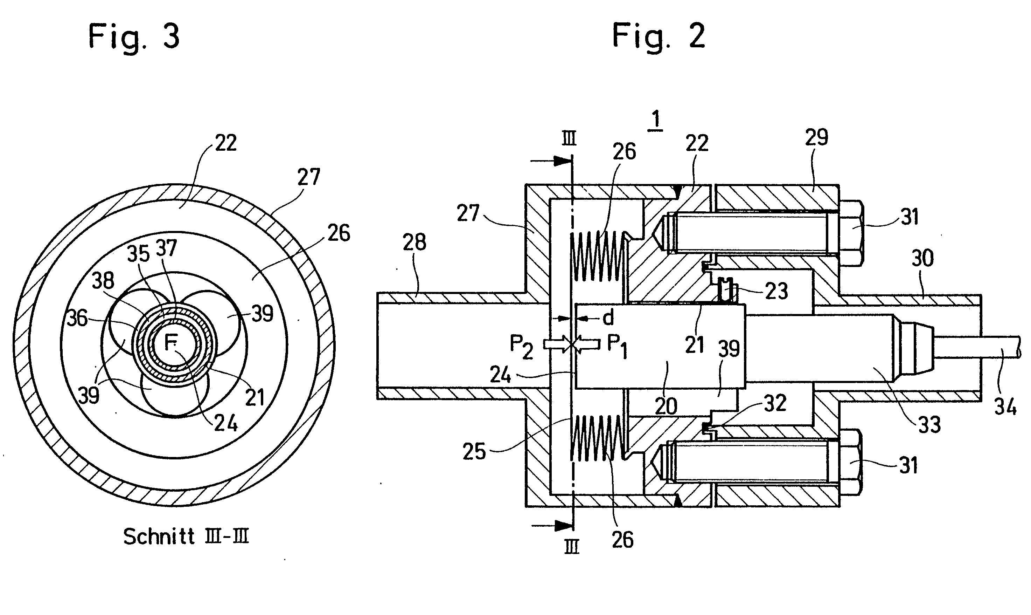

Der Achsschnitt eines Differenzdruckaufnehmers 1 ist in Fig. 2 dargestellt. Ein stabförmig ausgebildeter kapazitiver Wegaufnehmer 20 ist in einer Bohrung 21 eines ersten Gehäuseteiles 22 mit einer Madenschraube 23 gehalten. Das freie Ende des kapazitiven Wegaufnehmers 20 ragt aus der Bohrung 21 heraus und bildet mit seiner Stirnfläche eine erste Elektrode 24 des kapazitiven Differenzdruckaufnehmers 1. Eine zweite Elektrode 25 des kapazitiven Differenzdruckaufnehmers 1 besteht aus einer zu der ersten Elektrode in einem vorbestimmten Abstand d und parallel zu dieser angeordneten Scheibe, die über einen Faltenbalg 26 heliumdicht mit dem ersten Gehäuseteil 22 verbunden ist. Der Faltenbalg 26 und die zweite Elektrode 25 sind von einem zweiten Gehäuseteil 27 umschlossen, das einen zweiten Anschlußstutzen 28 aufweist und mit dem ersten Gehäuseteil 22 verschweißt ist. Auf der von dem Faltenbalg 26 abgewandten Seite des ersten Gehäuseteiles 22 ist ein drittes Gehäuseteil 29 mit einem ersten Anschlußstutzen 30 durch Schrauben 31 angeschlossen und mit einer Indiumdichtung 32 abgedichtet. Ein Stecker 33 zum Anschließen der Meßwertverarbeitung 9 wird von dem dritten Gehäuseteil 29 ebenfalls umschlossen.

Einen Schnitt III-III des Differenzdruckaufnehmers 1 zeigt Fig. 3. Der kapazitive Wegaufnehmer 20 ist als Schutzringkondensator ausgebildet, der mit einem doppelt abgeschirmten Triaxkabel 34 an die Meßwertverarbeitung 9 angeschlossen ist, die mit Hilfe einer 5 kHz Wechselspannung den Blindwiderstand $X_c = 1/j\omega C$ eines Kondensators der Kapazität $C = \varepsilon_o \cdot \varepsilon_r \cdot F/d$ bestimmt, der gebildet wird aus der ersten Elektrode 24 mit der Kreisfläche F und der im Abstand d angeordneten zweiten Elektrode 25. Mit $\varepsilon_o = 1$ der Dielektrizitätskonstanten für Vakuum und der relativen Dielektrizitätskonstanten für Flüssighelium bei 4,2 K $\varepsilon_r = 1,048$ ist $X_c = \text{Konst.} \cdot d$.

Die Stirnfläche des Wegaufnehmers 20 besteht aus der Elektrode 24 mit der Kreisfläche F, einem ersten Schutzring 35 und einem zweiten Schutzring 36, die gegeneinander durch Isolierungsringe 37, 38 elektrisch isoliert sind.

Der über die erste Abschirmung des Triaxkabels 34 mit der Meßwertverarbeitung 9 verbundene erste Schutzring 35 wird elektronisch ständig auf dem Potential der Elektrode 24 gehalten, so daß Kapazitätsänderungen des Triaxkabels 34 z. B. durch Lageänderungen das Meßergebnis nicht beeinflussen. Der zweite Schutzring 36 liegt auf Erdpotential.

Das den Wegaufnehmer 20 tragende erste Gehäuseteil 22 weist drei um die Bohrung 21 gleichmäßig verteilte Verbindungskanäle 39 auf, die den ersten Anschlußstutzen 30 mit dem Spalt der Breite d zwischen den Elektroden 24, 25 verbinden.

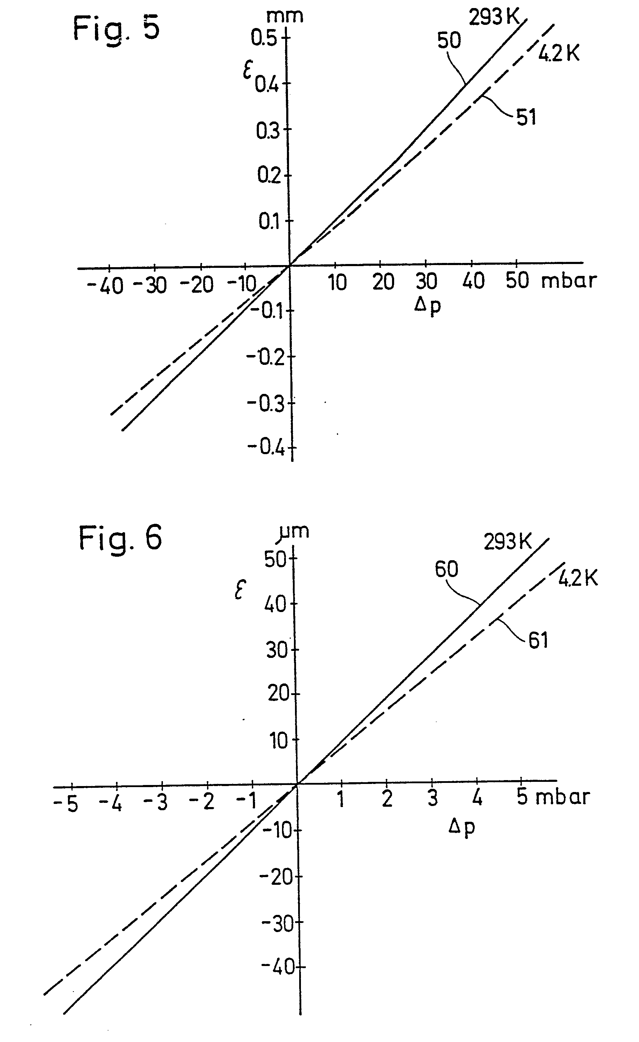

In Fig. 4 ist eine andere Ausführungsform des Differenzdruckaufnehmers 1 dargestellt, bei der kapazitive Wegaufnehmer 20 mit einem ersten Gehäuseteil 40 heliumdicht verschweißt ist und der Stecker 33 mit dem Triaxkabel 34 außerhalb des Heliumbereiches angeordnet ist. Ein erster Anschlußstutzen 41 ist in einer radialen Bohrung 42 des ersten Gehäuseteiles 40 heliumdicht verschweißt und mündet in einen ringförmigen Verbindungskanal 43.

Fig. 5 zeigt eine erste Eichkurve 50 bei 293 K und eine zweite Eichkurve 51 bei 4,2 K für Auslenkungen $\varepsilon$ der an den Faltenbalg 26 angeschlossenen zweiten Elektrode 25 des Meßkondensators im Millimeter-Bereich als Funktion des an der Elektrode 25 wirkenden Differenzdruckes $\Delta p = p_1 - p_2$ in mbar.

Eine dritte Eichkurve 60 bei 293 K und eine vierte Eichkurve 61 bei 4,2 K zeigt Fig. 6 für Auslenkungen $\varepsilon$ im Mikrometer-Bereich als Funktion des Differenzdruckes $\Delta p$ in mbar.

Aufgetragen ist in jedem Fall die gemessene Anslenkung der am Faltenbalg 26 angeschlossenen Elektrode 25 des Meßkondensators aus der Nullage über dem mit einem Präzisionsmamometer gemessenen Differenzdruck. Positives $\Delta p$ bedeutet, daß der Druck $p_1$ auf der dem Wegaufnehmer 20 zugewandten Seite größer ist als der Druck $p_2$ auf der anderen Seite der Elektrode 25.

Bei einem Differenzdruckaufnehmer ist z. B. der effektive Balgquerschnitt 3,7 cm$^2$ und die Federkonstante bei Raumtemperatur 3,85 N/mm. Daraus folgt ein Meßbereich von 3,85 N/3,7 cm$^2 \approx 100$ mbar bei einer Auslenkung von 1 mm.

In Abhängigkeit von der Einstellung des Abstandes d der Elektroden 24 und 25 können Druckdifferenzen $\Delta p$ in beiden Richtungen oder nur in einer Richtung gemessen werden.

Der Meßbereich kann durch die Wahl des Faltenbalges 26 und/oder des Wegaufnehmers 20 in vorbestimmter Weise eingestellt werden.

Die Linearität der Kurven ist im wesentlichen von der Kennlinie des Faltenbalges bestimmt. Bei Zusammendrücken des Faltenbalges $(- \Delta p)$ ist die Linearität der $\varepsilon$ ($\Delta p$)-Kurve über den Bereich von 100 mbar 0,6 %. Die Hysterese beträgt 0,8 %. Bei Dehnung des Faltenbalges $(+ \Delta p)$ zeigt die Eichkurve eine größere Abweichung von der Linearität.

Die Federkonstante des Faltenbalges 26 und damit die Eichkurve sind temperaturabhängig. Unterhalb von etwa 20 K ändert sich jedoch die Federkonstante nicht mehr, so daß bei Tieftemperaturanwendungen keine Temperaturabhängigkeit auftritt.

Die Ansprechzeit ist durch die Eigenfrequenz des Faltenbalges bestimmt, die bei Raumtemperatur 225 Hz und bei 4,2 K 245 Hz beträgt.

Die magnetfeldunabhängige Anzeige ist besonders wichtig, da bei Tieftemperaturanwendungen in vielen Fällen starke Magnetfelder vorhanden sind.

Eine magnetfeldunabhängige Anzeige ist gewährleistet, wenn der Differenzdruckaufnehmer aus nichtmagnetischen Materialien aufgebaut ist.

Der Differenzdruckaufnehmer wurde in einen äußeren Magnetfeld von 2 Tesla getestet. Dabei betrug die durch das Magnetfeld hervorgerufene Änderung in der Anzeige weniger als 0,2 mbar.

Das Ausgangssignal beträgt 96 mV/mbar. Die Auflösung ist infolge der hohen Stabilität des Ausgangssignales besser als $10^{-6}$ bar.

Bezugszeichenliste :

Figur 1

1 Differenzdruckaufnehmer
2 Supraleiteranordnung
3 Anschlußblock für 2
4 Trennwand in 3
5 Ausgang von 3
6 Wärmetauscher
7 Pumpe
8 Eingang von 3
9 Meßwertverarbeitung

Figur 2

20 kapazitiver Wegaufnehmer
21 Bohrung in 22
22 1. Gehäuseteil
23 Madenschraube
24 1. Elektrode von 20

25 2. Elektrode von 20
26 Faltenbalg
27 2. Gehäuseteil
28 2. Anschlußstutzen
29 3. Gehäuseteil
30 1. Anschlußstutzen
31 Schrauben
32 Indiumdichtung
33 Stecker von 20
34 Triaxkabel

Figur 3

35 erster Schutzring von 24
36 zweiter Schutzring von 24
37 Isolierring zwischen 24 und 35
38 Isolierring zwischen 35 und 36
39 Verbindungskanäle in 22

Figur 4

40 1. Gehäuseteil
41 1. Anschlußstutzen
42 radiale Bohrung in 40
43 Verbindungskanal in 40

Figur 5

50 1. Eichkurve
51 2. Eichkurve
ε Auslenkung von 25
Δp Differenzdruck an 25
$p_1$, $p_2$ Drücke an 25

Figur 6

60 3. Eichkurve
61 4. Eichkurve

d Abstand zwischen 24 und 25
$X_C$ Blindwiderstand
C Kapazität
$\varepsilon_0$ Dielektrizitätzkonstante für Vakuum
$\varepsilon_r$ relative Dielektrizitätskonstante
F Kondensatorfläche
j Imaginärteil einer komplexen Zahl in der Gauß'schen Zahlenebene

**Patentansprüche**

1. Differenzdruckaufnehmer (1) für den Tieftemperaturbereich mit
a) einem magnetfeldunabhängigen kapazitiven Geber, an dessen Elektroden (24, 25) der zu messende Differenzdruck eines Mediums wirkt und dabei den gegenseitigen Abstand d der Elektroden (24, 25) und dadurch die Kapazität $C = \varepsilon_0 \cdot \varepsilon_r \cdot (F/d)$ des kapazitiven Gebers in einer vorbestimmten Druck-Weg-Relation ändert, wobei $\varepsilon_0$ die Dielektrizitätskonstante für Vakuum, $\varepsilon_r$ die relative Dielektrizitätskonstante und F die Kondensatorfläche sind,
b) einer ortsfesten ersten Elektrode (24) des kapazitiven Gebers,

c) einer zweiten Elektrode (25) des kapazitiven Gebers die aus einer zu der ersten Elektrode (24) in einem vorbestimmten Abstand d und parallel zu dieser angeordneten Scheibe besteht, die über ein elastisch-verformbares Organ (26) heliumdicht an ein erstes Gehäuseteil (22, 40) angeschlossen ist,
d) einem das elastisch-verformbare Organ (26) und die zweite Elektrode (25) umschließenden zweiten Gehäuseteil (27), das mit dem ersten Gehäuseteil (22, 40) heliumdicht verbunden ist,
e) jeweils einem Anschluß (30, 41 ; 28) am ersten (22, 40) bzw. zweiten (27) Gehäuseteil für die zu vergleichenden Drücke, dadurch gekennzeichnet, daß
f) das elastisch-vervormbare Organ (26) ein Faltenbalg ist,
g) der kapazitive Geber einen stabförmigen Kapazitiven Wegaufnehmer (20) enthält, dessen Stirnfläche die erste Elektrode (24) des Gebers darstellt,
h) das den kapazitiven Wegaufnehmer (20) tragende erste Gehäuseteil (22, 40) einen oder mehrere Verbindungskanäle (39, 43) aufweist, die den ersten Anschlußstutzen (30, 41) mit einem den Spalt der Breite d zwischen der ersten Elektrode (24) und der zweiten Elektrode (25) einschließenden Raum verbinden und
i) die Anschlüsse (30, 41 ; 28) jeweils als Anschlußstutzen ausgebildet sind.

2. Differenzdruckaufnehmer nach Anspruch 1, dadurch gekennzeichnet, daß das erste Gehäuseteil (22) eine zentrale Bohrung (21) zum Einführen des kapazitiven Wegaufnehmers (20) aufweist, und daß am Umfang der zentralen Bohrung (21) die Verbindungskanäle (39) angeordnet sind.

3. Differenzdruckaufnehmer nach Anspruch 1 und 2, dadurch gekennzeichnet, daß auf der von dem Faltenbalg (26) abgewandten Seite des ersten Gehäuseteils (22) ein drittes Gehäuseteil (29) mit einem ersten Anschlußstutzen (30) heliumdicht angeschlossen ist.

4. Differenzdruckaufnehmer nach Anspruch 1 und 2, dadurch gekennzeichnet, daß der kapazitive Wegaufnehmer (20) und das erste Gehäuseteil (40) auf der von dem Faltenbalg (26) abgewandten Seite heliumdicht verbunden sind, und daß der erste Anschlußstutzen (41) in einer radialen Bohrung (42) einer Seitenwand des ersten Gehäuseteiles (40) heliumdicht verschweißt ist.

**Claims**

1. Differential pressure sensor (1) for the cryogenic range with
a) a magnetic field independent capacitive detector element at the electrodes (24, 25) of which the differential pressure of a fluid becomes effective while changing in a previously determined pressure-displacement relation the spacing d of the electrodes (24, 25) and hence the capacity $c = \varepsilon_0 \cdot \varepsilon_r \cdot (F/d)$ of the capacitive detector element, wherein $\varepsilon_0$ is the dielectric

constant for the vacuum, $\varepsilon_r$ is the relative dielectric constant, and F is the capacitor surface ;

b) a stationary first electrode (24) of the capacitive detector element ;

c) a second electrode (25) of the capacitive detector element consisting of a disk running parallel to the first electrode (24) at a previously defined distance d and connected helium tight to a first housing part (22, 40) via an elastically deformable element (26) ;

d) a second housing part (27) surrounding the elastically deformable element (26) and the second electrode (25) and connected helium tight with the first housing part (22, 40) ;

e) one connection each (41, 28) to the first (22, 40) and second (27) housing parts (22), respectively, for the pressures to be compared ; wherein

f) the elastically deformable element (26) is a bellows,

g) the capacitive detector element contains a rod shaped capacitive displacement sensor (20) whose front face makes up the first electrode (24) of the detector element ;

h) the first housing part (22, 40) accommodating the capacitive displacement sensor (20) has one or several connecting channels (39, 43) connecting the first nipple (30, 41) with a space enclosing the gap of width d between the first electrode (24) and the second electrode (25) ; and

i) the connections (30, 41, 28) each of them made as nipples.

2. Differential pressure sensor as defined in claim 1 wherein the first housing part (22) has a central bore (21) for insertion of the capacitive displacement sensor (20) and the connecting channels (39) are provided at the circumference of the central bore.

3. Differential pressure sensor as defined in claims 1 and 2 wherein on the face opposed to the bellows (26) of the first housing part (22) a third housing part (29) is connected helium tight via a first nipple (30).

4. Differential pressure sensor as defined in claims 1 and 2 wherein the capacitive displacement sensor (20) and the first housing part (40) are connected helium tight on the face opposed to the bellows (26) and the first nipple (41) is welded helium tight in a radial bore (42) of a lateral wall of the first housing part (40).

**Revendications**

1. Détecteur de différence de pression (1) pour le domaine des basses températures, comportant :

a) un émetteur capacitif dépendant du champ magnétique, sur les électrodes (24, 25) duquel agit la différence de pression d'un milieu que l'on doit mesurer, et modifie la distance réciproque d des électrodes (24, 25), et par suite la capacité $c = \varepsilon_o \cdot \varepsilon_r \cdot (F/d)$ de l'émetteur capacitif dans une relation pression-parcours déterminée, $\varepsilon_o$ étant la constante diélectrique pour le vide, $\varepsilon_r$ la constante diélectrique relative, et F la surface du condensateur,

b) une première électrode (24) fixe de l'émetteur capacitif,

c) une seconde électrode (25) de l'émetteur capacitif, qui est constituée d'un disque placé à une distance d prédéterminée par rapport à la première électrode (24) et parallèle à cette dernière, et qui est raccordée d'une façon étanche à l'hélium, à une première partie (22, 40) du boîtier, par un organe (26) déformable élastiquement,

d) une deuxième partie (27) du boîtier, renfermant l'organe (26) déformable élastiquement et la seconde électrode (25), qui est reliée, étanche à l'hélium, avec la première partie du boîtier (22, 40),

e) chaque fois un raccordement (41, 28) à la première (22, 40) ou à la seconde (27) partie (22) du boîtier, pour les pressions à comparer, caractérisé en ce que :

f) l'organe (26) déformable élastiquement, est un soufflet,

g) l'émetteur capacitif contient un capteur de déplacement (20) capacitif en forme de barre, dont la surface frontale constitue la première électrode (24) de l'émetteur,

h) la première partie (22, 40) du boîtier, portant le capteur de déplacement (20) capacitif présente un ou plusieurs canaux (39, 43) de liaison, qui relient le premier ajutage de raccordement (30, 41) avec une chambre comprenant la fente de largeur, qui sépare la première électrode (24) de la seconde électrode (25) et

i) les raccords (30, 41, 28) sont tous réalisés sous la forme d'ajutages de raccordement.

2. Détecteur de différence de pression suivant la revendication 1, caractérisé en ce que la première partie (22) du boîtier présente un alésage central (21) pour l'introduction du capteur de déplacement (20) capacitif et que, sur la circonférence de cet alésage central (21), sont disposés les canaux de liaison (39).

3. Détecteur de différence de pression suivant l'une des revendications 1 et 2, caractérisé en ce que, sur la face de la première partie (22) du boîtier qui est à l'opposé du soufflet (26), il se raccorde une troisième partie (29) du boîtier, avec un premier ajutage de raccordement (30), d'une façon étanche à l'hélium.

4. Détecteur de différence de pression suivant les revendications 1 et 2, caractérisé en ce que le capteur de déplacement (20) capacitif, et la première partie (40) du boîtier sont reliées, étanches à l'hélium, sur la face qui est à l'opposé du soufflet (26), et que le premier ajutage de raccordement (41) est soudé, étanche à l'hélium, dans un alésage radial (42) d'une paroi latérale de la première partie du boîtier (40).

## Fig. 1

4
3
8
1
5
34
7
9
2
6

## Fig. 4

41
26
42
1
40
43
24
d
P₂
P₁
28
25
20
33
34
27
26

1

0 059 769

Fig. 2

Fig. 3

Schnitt III-III

2

Fig. 5

Fig. 6